# EUROPÄISCHE PATENTANMELDUNG

(11) **EP 2 824 289 A1**
(43) Veröffentlichungstag der Anmeldung: **14.01.2015**
(21) Anmeldenummer: 14176333.4
(22) Anmeldetag: 09.07.2014
(51) Int. Cl.: F01D 25/18, F01D 11/04, F01D 11/02, F02C 7/28, F01D 9/06

(54) **Vorrichtung und Verfahren zum Ableiten von Sperrluft in einem Turbofan-Triebwerk sowie zugehöriges Turbofan-Triebwerk**

(30) Priorität: 10.07.2013 DE 102013213520
(71) Anmelder: Rolls-Royce Deutschland Ltd & Co KG, 15827 Blankenfelde-Mahlow (DE)
(72) Erfinder: Burghardt, Sascha, 15370 Vogelsdorf (DE)
(74) Vertreter: Gross, Felix

(57) **Zusammenfassung**

Die Erfindung betrifft eine Vorrichtung und ein Verfahren zum Ableiten von Sperrluft in einem Turbofan-Triebwerk, das einen Primärstromkanal (3), der sich durch ein Kerntriebwerk des Turbofan-Triebwerks erstreckt, und einen Nebenstromkanal (2) aufweist. Die Vorrichtung weist mindestens eine mittels Sperrluft des Turbofan-Triebwerks abgedichtete Lagerkammer (12, 32) auf, die mindestens ein ölgeschmiertes Lagerelement zur Lagerung eines mechanisches Teils (11, 31) des Turbofan-Triebwerks umgibt. Es ist mindestens einen Ableitungspfad (20, 26) für entweichende Sperrluft vorgesehen, der sich bis zum Nebenstromkanal (2) des Turbofan-Triebwerks erstreckt. Zugehörige Turbofan-Triebwerk sowie Verfahren zum Ableiten von Sperrluft in einem Turbofan-Triebwerk werden ebenfalls präsentiert.

## Beschreibung

Die Erfindung betrifft eine Vorrichtung und ein Verfahren zum Ableiten von Sperrluft in einem Turbofan-Triebwerk.

Ein Flugtriebwerk umfasst mindestens einen Verdichter, eine Brennkammer und mindestens eine Turbine. Dabei sind jeweils ein Verdichter und eine Turbine über eine Welle miteinander verbunden. Eine solche Welle ist in einer Lagerkammer mit Lagerelementen gelagert, welche mit Öl geschmiert und gekühlt werden. Das Öl wird üblicherweise einem Öltank entnommen, mittels einer Ölförderpumpe der Lagerkammer und den Lagerelementen zugeführt und über eine Ölabsaugpumpe wieder zum Öltank zurückgeleitet.

Um ein Austreten von Öl aus den Lagerkammern zu vermeiden, sind die Lagerkammern mit Dichtungen abgedichtet und werden sie zusätzlich von außen mit Sperrluft beaufschlagt. Diese Sperrluft bildet einen Überdruck (Sperrdruck) um die Lagerkammern und die Dichtungen, so dass ein positives Druckverhältnis über den Lagerkammerdichtungen entsteht. Dies bedeutet, dass der Luftdruck außerhalb der Lagerkammer, d. h. der Sperrdruck, größer ist als der Luftdruck innerhalb der Lagerkammer (der sogenannte Kammerdruck). Bei einem solchen positiven Druckverhältnis strömt Luft über die Dichtungen in die Lagerkammer ein und verhindert somit, dass Öl aus derselben austreten kann. Die Sperrluft wird üblicherweise als Kompressorzapfluft dem Verdichter der Turbomaschine entnommen und der Lagerkammer von außen zugeführt. Dabei ist nicht zu vermeiden, dass überschüssige Sperrluft zu einem gewissen Grad über eine Dichtung entweicht. Diese wird in den Luftstrom zum Kerntriebwerk geleitet.

Bekannte Sperrluftsysteme sind insofern nachteilig, als unter bestimmten Bedingungen, insbesondere während des Übergangs zwischen verschiedenen Betriebszuständen des Triebwerks die Sperrluftzufuhr an den Dichtungen der Lagerkammer zu gering sein kann, so dass der Sperrdruck nicht ausreicht, um ein positives Druckverhältnis über den Lagerkammerdichtungen zu erreichen. Dies kann zur Folge haben, dass Öl aus der Lagerkammer austritt. Ein Ölaustritt kann auch durch einen Verschleiß der Lagerkammerdichtungen erfolgen. Ein solcher Ölaustritt führt dazu, dass Öl in den Luftstrom zum Kerntriebwerk geleitet wird und von dort in die Zapfleitung zur Frischluftversorgung des Flugzeuges gelangt, so dass es zu einer gesundheitsschädlichen Kontamination der Kabinenluft kommen kann.

Der vorliegenden Erfindung liegt dementsprechend die Aufgabe zugrunde, eine Vorrichtung und ein Verfahren zum Ableiten von Sperrluft in einem Turbofan-Triebwerk bereitzustellen, die auch im Falle eines Austritts von Schmieröl aus den Lagerkammern die Kontamination von Kabinenluft verhindern.

Diese Aufgabe wird erfindungsgemäß durch eine Vorrichtung mit den Merkmalen des Anspruchs 1 und ein Verfahren mit den Merkmalen des Anspruchs 14 gelöst. Ausgestaltungen der Erfindung sind in den abhängigen Ansprüchen angegeben.

Danach sieht die erfindungsgemäße Lösung eine Vorrichtung zum Ableiten von Sperrluft in einem Turbofan-Triebwerk vor, die einen Ableitungspfad für entweichende Sperrluft ausbildet, der sich bis zum Nebenstromkanal des Turbofan-Triebwerks erstreckt. Der Ableitungspfad erstreckt sich somit von einer Stelle, an der eventuell mit Öl kontaminierte Sperrluft entweicht, bis in den Nebenstromkanal des Turbofan-Triebwerks. Eine solche Stelle ist beispielsweise eine Sperrluftdichtung, aus der Sperrluft entweicht.

Für den Fall, dass über Lagerkammerdichtungen Schmieröl aus der Lagerkammer austritt und sich mit der Sperrluft vermischt, wird auf diese Weise sichergestellt, dass die mit Schmieröl kontaminierte Sperrluft nicht in den Primärstromkanal und durch das Kerntriebwerk des Turbofan-Triebwerks, sondern stattdessen in den Nebenstromkanal des Turbofan-Triebwerks geleitet wird.

Somit verhindert es die erfindungsgemäße Lösung durch Ableiten kontaminierter Sperrluft in den Nebenstromkanal des Turbofan-Triebwerks, dass kontaminierte Sperrluft in einen Verdichter des Kerntriebwerks gelangt und von dort zur Frischluftversorgung und Druckregelung der Flugzeugkabine entnommen wird.

Gemäß einer Ausgestaltung der Erfindung erstreckt sich der Ableitungspfad für entweichende, überschüssige Sperrluft durch mindestens ein Leitrad des Primärstromkanals. Hierbei handelt es sich beispielsweise um ein am Anfang des Primärstromkanals angeordnetes Leitrad, das den Drall aus dem Luftstrom nimmt, den dieser zuvor in einem nabennahen Bereich eines Fans erhalten hat. Zur Bereitstellung einer Luftpassage für die Sperrluft weist das Leitrad beispielsweise mindestens einen Hohlraum auf, der eine entsprechende Luftpassage bildet.

Durch die Realisierung eines Abschnitts des Ableitungspfads in einem Leitrad des Primärstromkanals kann die Sperrluft unter Verwendung bereits vorhandener Strukturen und ohne Interaktion mit der im Primärstromkanal strömenden Luft den Primärstromkanal in radialer Richtung nach außen passieren. Daran anschließend ist der Ableitungspfad bis zum Nebenstromkanal des Turbofan-Triebwerks ausgebildet.

Der Ableitungspfad für die Sperrluft wird beispielsweise durch Gehäuse- und/oder Wandelemente gebildet, die zusammen eine Luftpassage bilden und hierdurch den Ableitungspfad definieren. Dabei kann vorgesehen sein, dass der Ableitungspfad entlang bereits vorhandener in einem Gehäuse ausgebildeter Kavitäten bereitgestellt ist.

Gemäß einer vorteilhaften Ausgestaltung ist vorgesehen, dass der Ableitungspfad zu einem rotierenden Element des Triebwerks, beispielsweise dem Fan oder einem Rotor eines Mitteldruck- oder Hochdruckverdichters eine Dichtung aufweist, so dass kontaminierte Sperrluft nicht oder nur in unwesentlichem Maße in den Primärstromkanal entweichen kann. Solche Dichtungen sind beispielsweise als Labyrinthdichtungen oder Bürstendichtungen realisiert.

Beispielsweise kann vorgesehen sein, dass der Ableitungspfad mindestens eine Dichtung zu einem Fan oder einem Rotor des Triebwerks derart aufweist, dass eine Lücke zwischen einem Gehäuse, das den Ableitungspfad in diesem Bereich begrenzt, und dem Fan oder Rotor verschlossen ist, über die anderenfalls Sperrluft in den Primärstromkanal entweichen könnte.

Die erfindungsgemäße Vorrichtung ist grundsätzlich zur Abdichtung beliebiger Lagerkammern eines Turbofan-Triebwerks geeignet, die ölgeschmierte Lagerelemente aufweisen. Gemäß einer Ausgestaltung weist die Lagerkammer Lagerelemente zur Lagerung einer Triebwerkswelle auf, beispielsweise einer Triebwerkswelle, die eine Niederdruckturbine mit dem Fan des Turbofan-Triebwerks koppelt. Die Lagerelemente zur Lagerung der Triebwerkswelle bilden beispielsweise ein Wälzlager aus. Jedoch können auch beliebige andere Lager zum Einsatz kommen.

Es wird darauf hingewiesen, dass in Ausgestaltungen der Erfindung die Lagerkammer, die mit Sperrluft abgedichtet wird, bezogen auf die axiale Richtung des Triebwerks vor der Entnahmestelle für die Zapfluft angeordnet ist. Die Entnahmestelle befindet sich zum Beispiel beim Hochdruckverdichter des Triebwerks. Dadurch, dass die mit Sperrluft beaufschlagten Lagerkammern sich in axialer Richtung vor einer solchen Entnahmestelle befinden, kann die Ableitung von Sperrluft in einen axial vorderen Bereich des Nebenstromkanals erfolgen.

Der genaue Abschnitt, in dem der Ableitungspfad im Nebenstromkanal endet, ist grundsätzlich unerheblich. Es kommt erfindungsgemäß lediglich darauf an, dass eventuell mit Schmieröl kontaminierte Sperrluft in den Nebenstromkanal des Turbofan-Triebwerks geleitet wird. Dabei kann in Ausführungsvarianten vorgesehen sein, dass der Ableitungspfad in axialer Richtung vor oder hinter einem Fan-Leitrad, das im Nebenstromkanal angeordnet ist, im Nebenstromkanal endet.

Gemäß einer weiteren Ausführungsvariante umfasst die Vorrichtung einen axial vorderen und einen axial hinteren Lagerkammerbereich. Diese beiden Lagerkammerbereiche können Teil einer einzigen Lagerkammer sein oder alternativ durch zwei getrennte Lagerkammern bereitgestellt werden. Es geht von jedem der Lagerkammerbereiche ein Ableitungs-Teilpfad aus. Die beiden Ableitungs- Teilpfade vereinen sich zu dem Ableitungspfad, der dann im Nebenstromkanal endet. Diese Vereinigung erfolgt in einem Ausführungsbeispiel, bevor der Abgaspfad sich durch ein Leitrad im Primärstromkanal erstreckt.

Gemäß einem Ausführungsbeispiel erfolgt die Beaufschlagung der Lagerkammer mit Sperrluft unter Bereitstellung einer der Lagerkammer zugeordneten Sperrluftdichtung. Über die Sperrluftdichtung, die ein Entweichen von Sperrluft aus einem Zuführungspfad begrenzt, wird sichergestellt, dass ein definierter Sperrdruck um die Lagerkammer vorliegt. Allerdings entweicht durch die Sperrluftdichtung zu einem gewissen Grad überschüssige Sperrluft, da die Sperrluftdichtung eine gewisse Leckage nicht verhindern kann. Die Sperrluft kann dabei mit aus der Lagerkammer ausgetretenem Öl kontaminiert sein. Diese entweichende Sperrluft oder Leckageluft wird über den Ableitungspfad zum Nebenstromkanal abgeleitet.

Die vorliegende Erfindung betrifft auch ein Turbofan-Triebwerk mit einem Primärstromkanal, einem Nebenstromkanal und einer Vorrichtung mit den Merkmalen des Anspruchs 1. Dabei endet der Ableitungspfad im Nebenstromkanal und ist dazu ausgebildet, entweichende Sperrluft, die mit Schmieröl kontaminiert sein kann, in den Nebenstromkanal zu leiten.

Gemäß einem weiteren Erfindungsaspekt betrifft die Erfindung ein Verfahren zum Ableiten von Sperrluft in einem Turbofan-Triebwerk mit den folgenden Schritten:
- Beaufschlagen einer Lagerkammer des Turbofan-Triebwerks, die mindestens ein ölgeschmiertes Lagerelement aufweist, mit Sperrluft; und
- Ableiten entweichender Sperrluft, die mit aus der Lagerkammer ausgetretenem Öl kontaminiert sein kann, zu einem Nebenstromkanal des Turbofan-Triebwerks.

Insbesondere kann vorgesehen sein, dass mit Öl kontaminierte Sperrluft, die aus einer Sperrluftdichtung austritt, über die ein bestimmter Sperrdruck um die Lagerkammer bereitgestellt wird, über den Ableitungspfad in den Nebenstromkanal abgeleitet wird. Der Ableitungspfad erstreckt sich in diesem Fall von der Sperrluftdichtung bis zum Nebenstromkanal.

Die Erfindung wird nachfolgend unter Bezugnahme auf die Figuren der Zeichnung anhand mehrerer Ausführungsbeispiele näher erläutert. Es zeigen:
- Figur 1: Komponenten eines ersten Ausführungsbeispiels eines Turbofan-Triebwerks unter Darstellung eines Fans, eines Primärstromkanals, eines Sekundärstromkanals und einer ersten Ausführungsvariante einer Vorrichtung zum Ableiten von Sperrluft;
- Figur 2: Komponenten eines zweiten Ausführungsbeispiels eines Turbofan-Triebwerks unter Darstellung eines Fans, eines Primärstromkanals, eines Sekundärstromkanals und einer zweiten Ausführungsvariante einer Vorrichtung zum Ableiten von Sperrluft; und
- Figur 3: Komponenten eines Turbofan-Triebwerks zur Bereitstellung von Sperrluft an einer Lagerkammer.

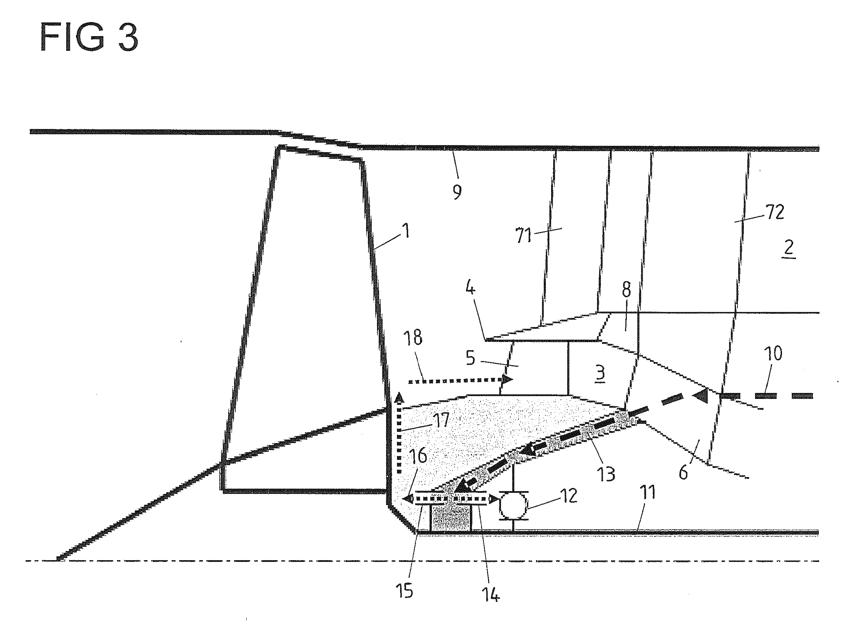

Zum besseren Verständnis der vorliegenden Erfindung wird zunächst ein Turbofan-Triebwerk, das die Beaufschlagung einer Lagerkammer mit Sperrluft vorsieht, jedoch die erfindungsgemäße Lösung noch nicht implementiert, anhand der Figur 3 erläutert.

Der in der Figur 3 dargestellte Ausschnitt eines Turbofan-Triebwerks umfasst eine Fanstufe mit einem Fan 1, von dem die durch den Fan 1 angesaugte Luftmasse zum einen in einen Nebenstromkanal 2 und zum anderen in einen Primärstromkanal 3 geleitet wird. Der Nebenstromkanal 2 und der Primärstromkanal 3 werden dabei hinter dem Fan 1 durch einen Splitter 4 voneinander getrennt.

Der Primärstromkanal 3 führt durch das Kerntriebwerk, das im Falle eines zweiwelligen Triebwerks einen Niederdruckverdichter, einen Hochdruckverdichter, eine Brennkammer, eine Hochdruckturbine und eine Niederdruckturbine umfasst. Im Falle eines dreiwelligen Triebwerks sind zusätzlich ein Mitteldruckverdichter und eine Mitteldruckturbine vorhanden.

In dem dargestellten Ausschnitt sind im Primärstromkanal 3 ein Leitrad 5 und Streben 6 angeordnet. Das Leitrad 5 dient dazu, den Drall aus dem Luftstrom zu nehmen, den dieser im nabennahen Bereich des Fans 1 erhalten hat. Der Primärstromkanal 3 ist von einer Gehäusestruktur 8 umgeben, die den Primärstromkanal 3 radial außen begrenzt. Radial innen ist der Primärstromkanal 3 durch entsprechende Kranzoberflächen der Rotoren und Statoren sowie angrenzende Begrenzungsstrukturen begrenzt.

Der Nebenstromkanal 2 des Turbofan-Triebwerks ist radial außen durch ein Außengehäuse 9 und radial innen durch die Gehäusestruktur 8 begrenzt. Dabei befindet sich hinter dem Fan 1 im Nebenstromkanal 2 ein Fan-Leitrad 71, das die Funktion erfüllt, den durch den Fan 1 in die Strömung eingebrachten Drall wieder aus der Strömung herauszunehmen. Zusätzlich können sich im Nebenstromkanal 2 hinter dem Fan-Leitrad 71 Streben 72 befinden, die dafür ausgelegt sind, strukturelle Lasten zu tragen. Sofern das Fan-Leitrad 71 selbst dazu ausgebildet ist, strukturelle Lasten zu tragen, kann auf solche Streben 72 verzichtet werden.

Das Triebwerk umfasst des Weiteren eine Triebwerkswelle 11, die im dargestellten Ausführungsbeispiel dazu vorgesehen ist, eine Niederdruckturbine des Triebwerks mit dem Fan 1 zu koppeln. Zur Lagerung der Triebwerkswelle 1 sind Lager, beispielsweise Wälzlager vorgesehen. Die Figur 3 zeigt eine Lagerkammer 12, innerhalb derer sich ein oder mehrere Lagerelemente (nicht gesondert dargestellt) befinden, die der Lagerung der rotierenden Triebwerkswelle 11 dienen. Wie bereits erwähnt, bilden die Lagerelemente beispielsweise ein Wälzlager. Die Lagerelemente werden mit Öl geschmiert und gekühlt. Hierzu wird der Lagerkammer in einem Ölkreislauf Schmieröl zugeführt, wie dem Fachmann an sich bekannt ist.

Die Lagerkammer 12 ist mit mindestens einer Lagerkammerdichtung 14 abgedichtet. Dabei ist vorgesehen, dass die Lagerkammerdichtung 14 zusätzlich mit Sperrluft 10 beaufschlagt wird. Die Sperrluft 10 wird als Zapfluft einem Verdichter des Triebwerks entnommen, beispielsweise dem Hochdruckverdichter. Die Zapfluft 10 wird dabei über einen Zuführungspfad 13 der Lagerkammer 12 zugeführt. Der Zuführungspfad 13 wird beispielsweise über Rohre und/oder Kanäle gebildet. Die Sperrluft 10 drückt auf die Lagerkammerdichtung 14 und verhindert so ein Austreten von Öl. Somit stellt die Sperrluft einen Sperrdruck an der Außenseite der Lagerkammer 12 bereit, der größer ist als der Kammerdruck innerhalb der Lagerkammer 12.

Bei der Lagerkammerdichtung 14 handelt es sich beispielsweise um eine Labyrinthdichtung, eine Karbondichtung oder eine Bürstendichtung.

Um sicherzustellen, dass ein ausreichender Sperrdruck an der Lagerkammerdichtung 14 anliegt, ist des Weiteren eine Sperrluftdichtung 15 vorgesehen, die ein Entweichen von Sperrluft 10 aus dem Zuführungspfad 13 weitgehend verhindert und dadurch einen ausreichenden Sperrdruck sicherstellt. Dabei kann vorgesehen sein, dass die Sperrluftdichtung 15 am Umfang einer Kavität ausgebildet ist, die die Lagerkammer 12 und die Lagerkammerdichtung 14 radial außen umgibt.

Jedoch verhält es sich so, dass durch die Sperrluftdichtung 15 in nicht vermeidbarer Weise Sperrluft entweicht, d.h. Leckageluft durch die Sperrluftdichtung 15 strömt. Diese wird entsprechend den Pfeilen 16, 17, 18 und vorbei an einer Lücke zwischen dem Fan 1 und dem angrenzenden Gehäuse in den Primärstromkanal 3 geleitet. Dies führt zu Problemen für den Fall, dass Schmieröl aus der Lagerkammer 12 und der Lagerkammerdichtung 14 austritt und sich mit Sperrluft mischt. Für diesen Fall führt die Rückführung verölter Sperrluft in den Primärstromkanal 3 dazu, dass die kontaminierte Luft in einen Verdichter des Kerntriebwerks zur Frischluftversorgung des Flugzeugs abgezapft wird, so dass es zu einer gesundheitsschädlichen Kontamination der Kabinenluft und einer Geruchsbelästigung kommen kann.

Gründe für den Austritt von Schmieröl können ein Verschleiß der Lagerkammerdichtung 14 und/oder bestimmte Betriebszustände des Triebwerks sein, in denen die Sperrluftzufuhr an der Dichtung 14 der Lagerkammer 12 zu gering ist, um ein positives Druckverhältnis über der Lagerkammerdichtung 14 bereitzustellen.

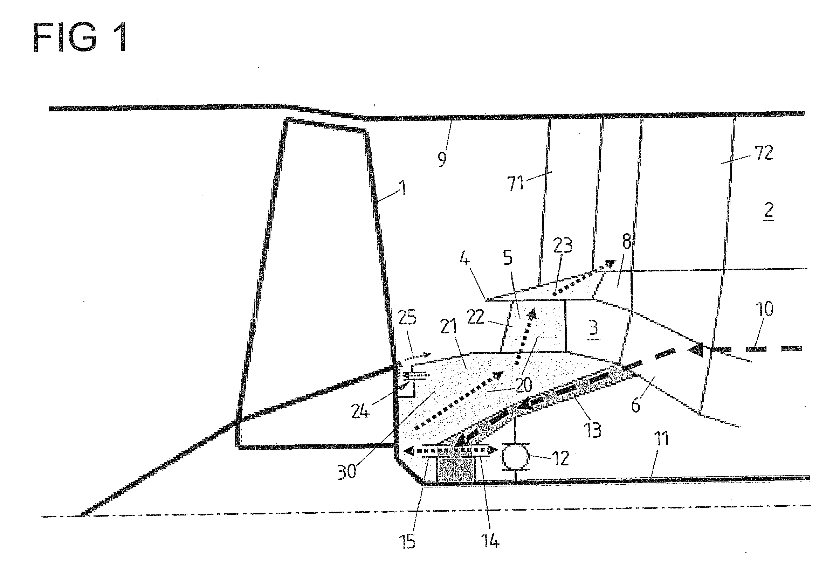

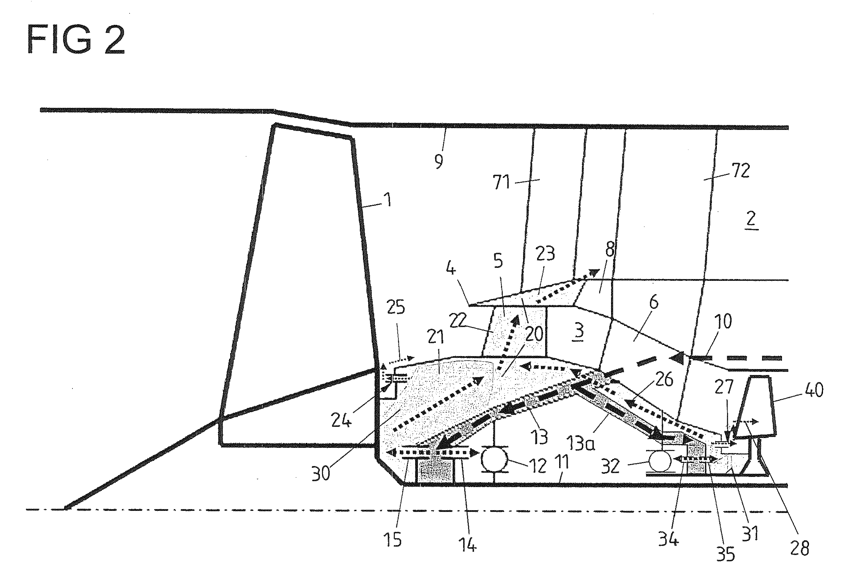

Die erfindungsgemäße Lösung des beschriebenen Problems wird nachfolgend an zwei Ausführungsbeispielen anhand der Figuren 1 und 2 erläutert.

Gemäß dem Ausführungsbeispiel der Figur 1 umfasst das Turbofan-Triebwerk eine Vorrichtung zum Ableiten von Sperrluft, die einen Ableitungspfad 20 ausbildet, der sich bis in den Nebenstromkanal 2 des Turbofan-Triebwerks erstreckt und dazu ausgebildet ist, Sperrluft, die von der Sperrluftdichtung 15 entweicht und mit Schmieröl kontaminiert sein kann, in den Nebenstromkanal 2 abzuleiten.

Der Ableitungspfad 20 erstreckt sich von der Sperrluftdichtung 15 bis zum Nebenstromkanal 2, so dass aus der Sperrluftdichtung 15 entweichendes Schmieröl vermischt mit Sperrluft über den Ableitungspfad 20 dem Nebenstromkanal 2 zugeführt werden kann. Dabei kann zusätzlich der Abschnitt zwischen der Lagerkammer 12 bzw. der Lagerkammerdichtung 14 und der Sperrluftdichtung 15 als Teil des Ableitungspfad betrachtet werden.

Der Ableitungspfad 20 umfasst drei Abschnitte 21, 22, 23, die im nabenseitigen Gehäuse, im Bereich des Leitrads 5 und dem Bereich der Gehäusestruktur 8 ausgebildet sind. Der erste Abschnitt 21 des Ableitungspfads 20 ist durch Gehäuse- und/oder Wandelemente einer nicht rotierenden nabenseitigen Tragstruktur 30 gebildet, die sich in axialer Richtung hinter dem Fan 1 erstreckt. Eine Luftpassage zur Bildung des Ableitungspfads in diesem Abschnitt 21 wird dabei in vorteilhafter Weise so weit wie möglich durch bereits vorhandene und miteinander verbundene Kanäle und Hohlräume gebildet. Zur Vermeidung, dass Sperrluft am Übergang zwischen dem rotierenden Fan 1 und der Tragstruktur 30 austreten und in den Primärstromkanal 3 gelangen kann, ist in diesem Bereich eine Dichtung 24 vorgesehen, bei der es sich beispielsweise um eine Labyrinthdichtung handelt. Der diese Dichtung 24 noch verlassende Anteil 25 an Sperrluft ist derart gering, dass er unproblematisch ist.

Der zweite Abschnitt 22 des Ableitungspfads 20 wird mittels des im Primärstromkanal 3 angeordneten Leitrads 5 realisiert. Hierzu ist beispielsweise vorgesehen, dass das Leitrad 5 hohl ausgebildet ist und hier durch einen Luftpassage für die Sperrluft bereitstellt. Im Bereich des Leitrads 5 passiert die eventuell mit Schmieröl kontaminierte Sperrluft den Primärstromkanal 3, ohne mit der im Primärstromkanal 3 strömenden Luft in Berührung zu gelangen.

Der dritte Abschnitt 23 des Ableitungspfads 20 ist in der Gehäusestruktur 8 realisiert, die sich in radialer Richtung zwischen dem Primärstromkanal 3 und dem Nebenstromkanal 2 ausgehend von dem Splitter 4 erstreckt. Hierzu sind in der Gehäusestruktur 8 durch geeignete Gehäuse- und Wandteile entsprechende Kanäle und miteinander verbundene Hohlräume realisiert.

Der Ableitungspfad 20 endet im Nebenstromkanal 2, und zwar im Bereich der radial inneren Begrenzungsfläche des Nebenstromkanals 2. Im dargestellten Ausführungsbeispiel ist der Ableitungspfad 20 dabei derart ausgebildet, dass er in axialer Richtung hinter dem Fan-Leitrad 71 im Nebenstromkanal 2 endet. Dies ist jedoch lediglich beispielhaft zu verstehen. Ebenso kann vorgesehen sein, dass der Ableitungspfad vor dem Fan-Leitrad 71 oder an beliebiger anderer Stelle im Nebenstrom-Kanal endet.

Die Figur 2 zeigt ein weiteres Ausführungsbeispiel eines Turbofan-Triebwerks mit einer Vorrichtung zum Ableiten von Sperrluft. Bei diesem Ausführungsbeispiel ist eine weitere (zweite) Lagerkammer 32 vorhanden, die sich bezogen auf die Strömungsrichtung im Triebwerk in axialer Richtung hinter der in Bezug auf die Figur 1 erläuterten (ersten) Lagerkammer 12 befindet. Die zweite Lagerkammer 32 umfasst mindestens ein Lagerelement zur Lagerung einer Mitteldruck- oder Hochdruckwelle 31, die eine Mitteldruck- oder Hochdruckturbine mit einem Mitteldruck- oder Hochdruckverdichter 40 koppelt. Die Lagerkammern 12, 32 können getrennte Lagerkammern sein oder alternativ unterschiedliche Lagerbereiche einer einzelnen Lagerkammer darstellen.

Ebenso wie die Lagerkammer 12 weist auch die Lagerkammer 32 eine Lagerkammerdichtung 34 auf, die mit Sperrluft 10 beaufschlagt ist. Hierzu teilt sich der Zuführungspfad für die Sperrluft 10 in zwei Zuführungs-Teilpfade 13, 13A auf, die zum einen zu der Lagerkammer 12 und zum anderen zu der Lagerkammer 32 führen. Der dargestellte Verlauf der Zuführungs-Teilpfade 13, 13A ist dabei nur beispielhaft zu verstehen.

Der zweiten Lagerkammer 32 ist des Weiteren eine Sperrluftdichtung 35 zugeordnet, die einen ausreichenden Sperrdruck um die Lagerkammer 32 bereitstellt, entsprechend der Sperrluftdichtung 15 des Zuleitungs-Teilpfads 13.

Wie in Bezug auf die Figur 1 im Hinblick auf die Sperrluftdichtung 15 erläutert, kann über die Sperrluftdichtung 35 Sperrluft, die mit Schmieröl kontaminiert sein kann, als Leckage austreten. Diese Sperrluft wird über einen Ableitungs-Teilpfad 26 abgeleitet. Der Ableitungs-Teilpfad 26 vereint sich mit dem Ableitungs-Teilpfad 21, der entsprechend der Darstellung der Figur 1 ausgebildet ist, bzw. mündet in Letzteren, bevor die Sperrluft durch das Leitrad 5 strömt. Der Ableitungs-Teilpfad 26 erstreckt sich dabei angrenzend an die radial innere Begrenzung des Primärströmungskanals 3, und zwar in Richtung des Leitrads 5 und dabei entgegengesetzt der Strömungsrichtung im Primärströmungskanal 3.

Die weitere Ableitung der Sperrluft über die Abschnitte 22 und 23 des Ableitungspfades 20 erfolgt wie in Bezug auf die Figur 1 erläutert.

Es wird darauf hingewiesen, dass auch der Ableitungs-Teilpfad 26 am Übergang zum Rotor 40 des Mitteldruck- oder Hohldruckverdichters 40 eine Dichtung 27 ausbildet, wobei verbleibende über die Dichtung 27 austretende Sperrluft 28 vernachlässigbar ist. Die Dichtung 25 zum rotierenden Fan 1 und die Dichtung 27 zum rotierenden Rotor 40 verhindern somit weitgehend einen Austritt von Sperrluft aus dem Ableitungspfad 21, 26 und stellen sicher, dass die aus den Sperrluftdichtungen 15, 35 austretende, möglicherweise mit Schmieröl kontaminierte Sperrluft über die Ableitungspfade 21, 26, 22, 23 in den Nebenstromkanal 2 geleitet wird. Damit wird der wesentliche Teil der mit Schmieröl kontaminierten Sperrluft nicht in den Luftstrom für das Kerntriebwerk, sondern in den Nebenstromkanal 2 geleitet.

Die Erfindung beschränkt sich in ihrer Ausgestaltung nicht auf die vorstehend dargestellten Ausführungsbeispiele, die lediglich beispielhaft zu verstehen sind. So kann in alternativen Ausgestaltungen der Verlauf und die strukturelle Ausgestaltung des Ableitungspfads 20 für Sperrluft in anderer Weise ausgebildet sein. Auch können sich der Primärstromkanal 3 und der Sekundärstromkanal 2 in ihrer Formgebung und im Hinblick auf die in ihnen angeordneten Elemente von den beschriebenen Ausführungsbeispielen unterscheiden. Weiter kann es sich bei der Lagerkammer, die ölgeschmierte Lagerelemente zur Lagerung eines mechanischen Teils des Turbofan-Triebwerks aufweist, statt um eine Lagerkammer für eine Triebwerkswelle um eine Lagerkammer zur Lagerung eines anderen rotierenden Teils des Triebwerks handeln.

## Patentansprüche

1. Vorrichtung zum Ableiten von Sperrluft in einem Turbofan-Triebwerk, das einen Primärstromkanal (3), der sich durch ein Kerntriebwerk des Turbofan-Triebwerks erstreckt, und einen Nebenstromkanal (2) aufweist, wobei die Vorrichtung mindestens eine mittels Sperrluft des Turbofan-Triebwerks abgedichtete Lagerkammer (12, 32) aufweist, die mindestens ein ölgeschmiertes Lagerelement zur Lagerung eines mechanisches Teils (11, 31) des Turbofan-Triebwerks umgibt,
**gekennzeichnet durch**
mindestens einen Ableitungspfad (20, 26) für entweichende Sperrluft, der sich bis zum Nebenstromkanal (2) des Turbofan-Triebwerks erstreckt.

2. Vorrichtung nach Anspruch 1, **dadurch gekennzeichnet, dass** der Ableitungspfad (20) sich durch mindestens ein Leitrad (5) des Primärstromkanals (3) erstreckt.

3. Vorrichtung nach Anspruch 2, **dadurch gekennzeichnet, dass** das Leitrad (5) mindestens einen Hohlraum zur Bereitstellung einer Luftpassage für die Sperrluft aufweist.

4. Vorrichtung nach einem der vorangehenden Ansprüche, **dadurch gekennzeichnet, dass** der Ableitungspfad (20, 26) zumindest abschnittsweise durch Gehäuse- und/oder Wandelemente (30, 8) gebildet ist, die eine Luftpassage für die Sperrluft bilden.

5. Vorrichtung nach einem der vorangehenden Ansprüche, **dadurch gekennzeichnet, dass** der Ableitungspfad (20, 26) mindestens eine Dichtung (24, 27) zu einem rotierenden Element (1, 40) des Triebwerks aufweist.

6. Vorrichtung nach Anspruch 5, **dadurch gekennzeichnet, dass** der Ableitungspfad (20, 26) mindestens eine Dichtung (24, 27) zu einem Fan (1) oder einem Rotor (40) des Triebwerks derart aufweist, dass eine Lücke zwischen einem Gehäuse (30), das den Ableitungspfad (20, 26) in diesem Bereich begrenzt, und dem Fan (1) oder Rotor (40) durch die Dichtung (24, 27) im Wesentlichen verschlossen ist.

7. Vorrichtung nach einem der vorangehenden Ansprüche, **dadurch gekennzeichnet, dass** die Lagerkammer (12, 32) Lagerelemente zur Lagerung einer Triebwerkswelle (11, 31) aufweist.

8. Vorrichtung nach einem der vorangehenden Ansprüche, **dadurch gekennzeichnet, dass** die Lagerkammer (12, 32) bezogen auf die axiale Richtung des Triebwerks vor der Entnahmestelle für die Sperrluft angeordnet ist.

9. Vorrichtung nach einem der vorangehenden Ansprüche, **dadurch gekennzeichnet, dass** der Ableitungspfad (20, 26) derart ausgebildet ist, dass er vor oder hinter einem Fan-Leitrad (71), das im Nebenstromkanal (2) angeordnet ist, im Nebenstromkanal (2) endet.

10. Vorrichtung nach einem der vorangehenden Ansprüche, **dadurch gekennzeichnet, dass** die Vorrichtung einen axial vorderen Lagerkammerbereich und einen axial hinteren Lagerkammerbereich einer oder unterschiedlicher Lagerkammern (12, 32) aufweist, wobei von jeder der Lagerkammerbereiche ein Ableitungs-Teilpfad (21, 26) ausgeht und sich die Ableitungs-Teilpfade (21, 26) zu dem Ableitungspfad (20) vereinen.

11. Vorrichtung nach Anspruch 10, soweit rückbezogen auf Anspruch 2, **dadurch gekennzeichnet, dass** die Vereinigung der Ableitungs-Teilpfade (21, 26) erfolgt, bevor der Ableitungspfad (20) durch ein Leitrad (5) des Primärstromkanal (3) führt.

12. Vorrichtung nach einem der vorangehenden Ansprüche, **dadurch gekennzeichnet, dass** der mit Sperrluft luftgedichteten Lagerkammer (12, 32) eine Sperrluftdichtung (15, 35) zugeordnet ist, die einen bestimmten Sperrdruck um die Lagerkammer bereitstellt, wobei durch die Sperrluftdichtung (15, 35) überschüssige Sperrluft, die mit aus der Lagerkammer (12, 32) ausgetretenem Öl kontaminiert sein kann, entweicht und diese über den Ableitungspfad (20, 26) zum Nebenstromkanal (2) abgeleitet wird.

13. Turbofan-Triebwerk mit einem Primärstromkanal (3), der sich durch ein Kerntriebwerk des Turbofan-Triebwerks erstreckt, mit einem Nebenstromkanal (2) und mit einer Vorrichtung mit den Merkmalen des Anspruchs 1, wobei der Ableitungspfad (20, 26) im Nebenstromkanal (2) endet und dazu ausgebildet ist, entweichende Sperrluft in den Nebenstromkanal (2) zu leiten.

14. Verfahren zum Ableiten von Sperrluft in einem Turbofan-Triebwerk, das einen Primärstromkanal (3), der sich durch ein Kerntriebwerk des Turbofan-Triebwerks erstreckt, und einen Nebenstromkanal (2) aufweist, mit den Folgenden Schritten:
- Beaufschlagen einer Lagerkammer (12, 32) des Turbofan-Triebwerks, die mindestens ein ölgeschmiertes Lagerelement aufweist, mit Sperrluft; und
- Ableiten entweichender Sperrluft, die mit aus der Lagerkammer (12, 32) ausgetretenem Öl kontaminiert sein kann, zu einem Nebenstromkanal (2) des Turbofan-Triebwerks.

15. Verfahren nach Anspruch 14, **dadurch gekennzeichnet, dass** mit Öl kontaminierte Sperrluft, die aus einer Sperrluftdichtung (15, 35) austritt, in den Nebenstromkanal (2) geleitet wird.
